# EUROPEAN PATENT SPECIFICATION

(11) **EP 3 184 697 B1**
(45) Date of publication and mention of the grant of the patent: **05.06.2019**
(21) Application number: 16002662.1
(22) Date of filing: 15.12.2016
(51) Int. Cl.: E01H 1/08, E01C 19/15, A01B 45/00

(54) **METHOD AND DEVICE FOR REGENERATING PLAYING FIELDS MADE OF SYNTHETIC GRASS**
VERFAHREN UND VORRICHTUNG ZUR REGENERIERUNG VON AUS SYNTHETISCHEM GRAS HERGESTELLTEN SPIELFELDERN
PROCÉDÉ ET DISPOSITIF DE RÉGÉNÉRATION DE TERRAINS DE JEU EN GAZON SYNTHÉTIQUE

(30) Priority: 24.12.2015 IT UB20159485
(43) Date of publication of application: 28.06.2017
(73) Proprietor: DECO SPORT S.N.C., 12055 Diano d'Alba (CN) (IT)
(72) Inventor: Bussi, Alberto, I-12055 Diano D'Alba (CN) (IT)
(74) Representative: Garavelli, Paolo

(56) References cited:
- WO-A1-92/20272
- WO-A1-95/06781
- WO-A1-2015/011326
- GB-A- 2 389 037

## Description

The present invention refers to a device according to the preamble of claim 1 and to a method according to the preamble of claim 9 for regenerating playing fields made of synthetic grass.

Lawns made of synthetic grass are more and more widespread due to a series of clear advantages, which this product offers, namely minimum maintenance, suitability to every atmospheric situation and an always cured aesthetic appearance.

Synthetic grass is used, among others, for sports fields, in which resistance characteristics with respect to natural grass are of major importance. However, with an intense use, the threads of the synthetic grass could provide, with the passage of time, an unpleasant squashing. Even when grass threads are equipped with ribs, in playing fields, above all in football fields, due to their heavy and repeated use, the infill tends to be compacted in the lower part of the substrate. Consequently, filaments of synthetic grass, lacking their side support provided by the infill, tend to bend, making the playing surface scarcely performing and not homogeneous. Moreover, bent grass filaments offer a wider treading surface so that they are subjected to an early wear.

Infill material used in fields made of synthetic grass tends, in shorter or longer times (depending on the amount and type of infill, on the frequency of use and on climatic conditions) to be compacted at the base of the grass filament, making this latter one rest and making ground hard to be walked on. Bouncing and rolling of a ball, play safety and lift of the filament itself are therefore strongly impaired by this condition.

In order to understand which inconveniences occur in a playground in which an efficient maintenance is not carried out, it is necessary to be aware of which is the structure of a grass carpet suitable for sports use.

A grass thread is usually from 2 to 6 cm long and only its last centimeter projects from the infill (namely from the material distributed on the carpet): in this way, the infill, usually composed of sand and/or rubber granules or natural materials, keeps the grass thread straight and therefore more or less faithfully reproduces the conditions of a natural field.

With a repeated use, above all when running over it, the infill is downward compressed, leaving the filaments without their side support, and they consequently bend themselves. The use conditions therefore are very different from those for which it was designed. In a short time, in the field areas subjected to a longer use, there appear grass filaments which are bent, thinned, fibrillated and torn; the infill which should be higher than 3÷4 cm, is instead compacted with a high density and therefore with lower compression resiliency. The playing surface is therefore scarcely homogeneous and performing, but above all dangerous for players who run on a hard, slippery and not uniform surface.

Leaving a field under similar situations generates damages, which cannot be repaired with subsequent maintenance operations.

An artificial lawn is often subjected to maintenance operations, such as a brushing to lift again the bend grass, re-distributing the infill, change the grass direction in order to straighten it. These operation however are not enough and efficient for a playing field made of synthetic grass. Moreover, the intense use of brushes creates an excessive mechanical abrasion and therefore it is by itself a reason of earlier wear of the filaments which tend to be thinned and to get more and more detached. The more brush bristles are made of rigid plastic, the more this phenomenon of early wear is accelerated. The situation is further worsened if brushes are ballasted with weights or if more aggressive fixtures are used, such as harrows.

Some known techniques provide for collecting the infill and then uniformly distributing it again on the field. This operation is performed by a first device, through a strong air jet, or by a suction device, which makes the infill rise, which is then sucked by a second device and collected in a container. Then the infill is again uniformly deposited on the field, by a third device, which also takes care of brushing the grass layer.

The described technique is suitable for large surfaces and could be adapted with difficulty to small playgrounds, such as football fields for 5 or 7 and 8 players, since many machines and a lot of personnel are necessary. The fact that various machines and people simultaneously working on the same field with small sizes mutually obstacle themselves must also not be neglected.

Documents GB-A-2 389 037, WO-A1-92/20272, WO-A1-95/06781 and WO-A1-2015/011326 disclose regeneration methods and devices according to the prior art, which do not deal with a ballast substrate or have the above mentioned problems.

The present invention at least partially solves the above technical problems, by providing a device and a method for regenerating playing fields made of synthetic grass having respectively the features of claim 1 and claim 9.

In other words, an uncompacting and venting effect is obtained, through a controlled air jet, for the infill made of rubber or other synthetic or natural materials, making it rise along the whole height of the filaments, providing the necessary side support so that the filaments do not excessively lie down and at the same time conferring necessary performances to the playing surface.

A clear advantage of the method/device of the invention is that the whole operation is performed by a single person, using a single machine, thereby being wholly suitable for treating even small surfaces (from standard football fields for 11 players to small fields for 5 players), strongly reducing the personnel costs.

It is intended that all enclosed claims are an integral part of the present description.

The invention will now be described, as a nonlimiting example, by a preferred embodiment thereof and with reference to the enclosed drawings, in which:
- figure 1 shows a device according to the invention, for regenerating surfaces made of synthetic grass, dragged by a small tractor;
- figure 2 schematically shows this device of the invention; and
- figure 3 shows in detail the part of the device in direct contact with the ground.

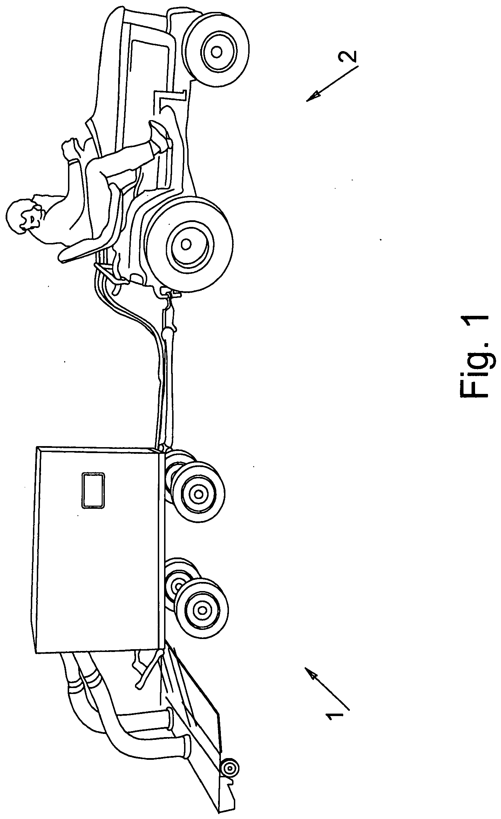

With reference to figure 1, (1) designates a trolley equipped with means for the regeneration treatment of a mantle made of synthetic grass, of the type equipped with a performance infill (made of rubber or other synthetic or natural materials), said trolley being dragged by a tractor (2).

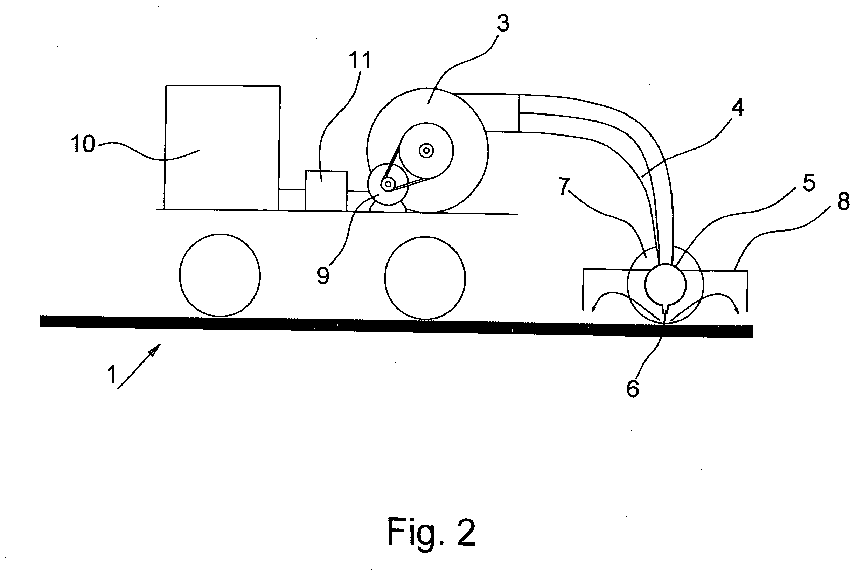

On the trolley a fan (3) (Fig. 2) is placed, for example of the centrifugal type, connected through one or more flexible tubes (4) to a blowing manifold (5) which sends pressurized air to a plurality of nozzles (6). Said blowing manifold can be single or divided into many parts, which can have independent orientations.

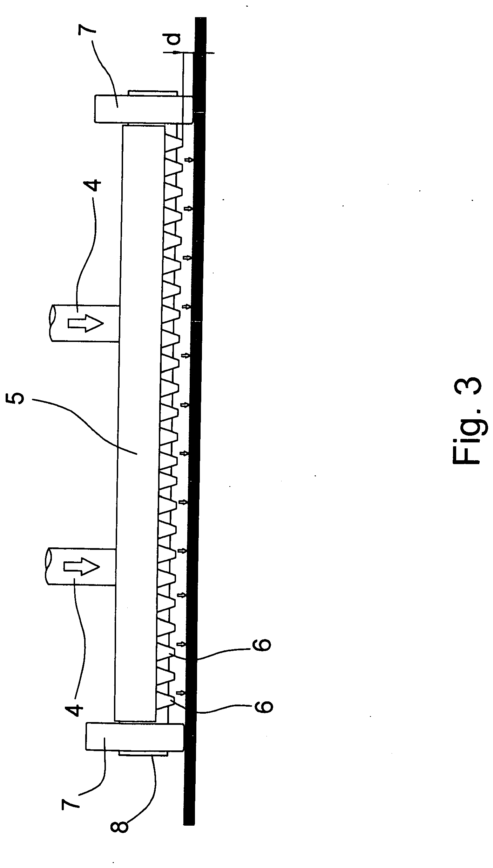

The manifold (5) is assembled on pivoting wheels (7) which have the function of suitably spacing the nozzles (6) from the grass mantle (Fig. 3). According to a preferred embodiment, the wheels (7) are adjustable in height in order to adequately regulate the distance "d" of the blowing manifold (5) from the lawn surface.

According to a preferred embodiment, the distance "d" is included between 0.2 cm and 25 cm, preferably between 0.5 and 8 cm.

The manifold (5) and the nozzles (6) are inserted in a carter (8), made of perforated sheet, whose function is containing the infill lifted by the rebounding air flow.

The fan (3) can be actuated in various ways, for example by an electric motor (9) supplied by a current generator (10) and an inverter (11), or through a single-phase or three-phase electric mains.

Air exiting the centrifugal fan (3), which reaches the manifold (5) through said flexible tubes (4), goes out of the nozzles (6) of the manifold (5) itself and, by penetrating through the filaments of the synthetic grass, creates a bouncing air flow which pushes the infill upwards. In practice, the infill projected against the carter (8) will fall back on the ground being uniformly distributed among the synthetic grass threads.

The air flow exiting the fan (3) is adjusted in order to lift again the performance infill, without affecting the substrate made of silica sand as ballast (where present), avoiding a mixing between the sand ballast substrate and the performance infill.

The infill, once lifted by the bouncing flow, falls on the ground in the immediate neighborhood being distributed with the correct density, a slight final brushing will contribute to uniformly distribute it on the surface.

The air flow must be regulated depending on the following parameters:
- type and amount of infill (natural infill, synthetic infill, etc.);
- typology and height of the synthetic grass filament;
- humidity and temperature;
- presence or not of a ballast substrate made of silica sand.

Also the fact that the field is covered or uncovered affects the adjustment of the air flow.

Adjustments approximately occur according to the following criteria:
- the more humid the field, the longer the filaments are, and the higher the amount of infill is, the higher must be pressure and flow-rate of the air jet necessary to correctly uncompact the infill;
- the drier and lighter the infill, especially if it is a natural infill in covered field, the shorter the length of the filaments is and the lower the amount of infill is, the smaller must be pressure and flow-rate of the air jet necessary to correctly uncompact the infill.

In synthesis, too much pressure and flow-rate can make the performance infill mix with the ballast sand; instead, insufficient pressure and flow-rate do not allow correctly venting and uncompacting the lower layer of the performance infill. The skilled person in the art could easily find the adjustment for an optimum operation, by performing a limited number of tests according to the above principles.

The adjustment of the air flow can be performed by changing the rotation speed of the centrifugal fan (3). This can be obtained by manually intervening on the inverter (10). If the inverter (10) is adapted to automatically operate, this must be programmed to be able to generate many curves according to the parameters set by the operator, depending on the above mentioned parameters. For example, by automatically regulating the rotation revolutions depending on the desired pressure in the blowing manifold (5), connecting a pressure switch placed in the blowing manifold (5) to an inlet of the inverter PLC.

Also the height of the manifold (5) can be adjusted by the operator, by acting on the pivoting wheels (7), according to the playground conditions. Finally, also the nozzles (6) are interchangeable according to the type of infill and of filament. The choice of the nozzle will have to be made depending on the same parameters based on which the air flow has to be regulated.

The fan (3) can also be actuated with other means (not shown) and namely:
- a combustion engine keyed onto the shaft of the fan or through a drive belt;
- the power take-off of the pull tractor;
- a battery pack, an inverter and an electric motor;
- a hydraulic motor.

The best technical solution is the one which allows determining with the maximum possible accuracy the number of revolutions of the fan/blower and therefore pressure and flow-rate.

In turn, the device (1) of the invention can be assembled, in addition to a trolley (1), onto a self-propelled vehicle with combustion engine or an electric or hybrid vehicle. The trolley (1), in turn, can be dragged by a vehicle with combustion engine, or an electric or hybrid vehicle.

If the fan (3) is actuated through the power take-off of a tractor, the trolley (1) must obviously be dragged by a tractor.

Finally, above all for medium-small sized surfaces, the trolley (1) can be manually dragged.

According to a preferred embodiment, the device of the invention can be used for sanitizing a synthetic lawn. This can be obtained by simply vaporizing a sanitizing liquid onto the synthetic grass through the blowing manifold (5). The method is much more efficient than a surface spraying, since it deeply penetrates and can be performed at the same time with a second uncompacting passage with a single machine. The sanitizing device comprises the following components (not shown):
- a tank for containing the sanitizing liquid;
- a tap for regulating the flow of said sanitizing liquid;
- a plurality of small tubes which depart from a main piping, coming from said tank, and are inserted in each of the nozzles (6).

According to a further embodiment, the device of the invention can also be used for cleaning the field. This can be easily obtained through a vibrating sieve (not shown) on which the infill lifted by the rebounding air flow is made fall, said vibrating sieve allowing to fall the infill on the synthetic grass by separating it from everything which has bigger sizes, such as dirt and worn and detached grass filaments. The vibrating sieve is placed at a distance varying from 1 to 15 cm from the blowing manifold and is supported by pivoting wheels dampened by springs. The vibrator is supplied by the generator or by the 12V plug of the dragging vehicle.

As clearly appears from the previous description, the use of a device in compliance with the invention allows easily treating surfaces coated with synthetic grass. In fact it is enough that the operator drags a trolley, equipped with the device of the invention, moving on a field made of synthetic grass at a constant speed and performing concentric circles, or other routes capable of covering the whole playing surface, better with a double passage along opposite travelling directions, said operation being able to be performed by a single person.

The invention has been described as a non limiting example, according to a preferred embodiment thereof. The skilled person in the art could find other embodiments, all falling within the scope of the claims which follow.

## Claims

1. Device, namely a trolley, (1) for regenerating playing fields made of synthetic grass, equipped with an infill and with a ballast substrate made of silica sand, said regeneration being obtained by airing and uncompacting said infill by using an air jet adapted to lift said infill, **characterised in that** said device (1) contains therein a centrifugal fan (3), adapted to generate said air jet, connected through one or more flexible tubes (4) to one or more blowing manifolds (5) adapted to send pressurized air to a plurality of nozzles (6), placed inside a carter (8), said carter (8) being connected to and dragged by said device (1), said nozzles (6) directly blowing onto said playing field and lifting the infill through a rebounding air flow, said infill being projected against said carter (8) and falling back on the ground being uniformly distributed among the filaments of the synthetic grass, said carter (8) being preferably made of a perforated sheet, said centrifugal fan (3) being alternatively actuated with the following means contained in the device (1):
- an electric motor (9) supplied by a current generator (10) and/or an inverter (11);
- a combustion engine keyed onto the shaft of the fan or through a drive belt;
- the power take-off of a pull tractor (2);
- a battery pack, an inverter and an electric motor;
- a hydraulic motor.

2. Device (1) for regenerating playing fields made of synthetic grass according to claim 1, **characterized in that** said one or more blowing manifolds (5), adapted to send pressurized air to a plurality of nozzles (6), have independent orientations.

3. Device (1) for regenerating playing fields made of synthetic grass according to claim 2, **characterized in that** said nozzles (6) are placed at a distance "d" from the ground included between 0.2 cm and 25 cm, and preferably at a distance "d" from the ground included between 0.5 cm and 8 cm.

4. Device (1) for regenerating playing fields made of synthetic grass according to any one of claims 1 to 3, **characterized in that** said one or more blowing manifolds (5) are assembled on wheels (7) adjustable in height, thereby adjusting said distance "d" of said nozzles (6) from the ground, said wheels (7) being preferably pivoting.

5. Device (1) for regenerating playing fields made of synthetic grass according to claim 1, **characterized in that** it comprises a PLC, adapted to automatically regulate the rotation speed of said electric motor (9), connected to a pressure switch, placed in said one or more blowing manifolds (5).

6. Device (1) for regenerating playing fields made of synthetic grass according to any one of claims 1 to 5, **characterized in that** said device (1) is assembled, alternatively, on a trolley or on a self-propelled vehicle with combustion engine or an electric or hybrid vehicle.

7. Device (1) for regenerating playing fields made of synthetic grass according to any one of claims 1 to 6, **characterized in that** it comprises:
- a tank for containing a sanitizing liquid;
- a tap for regulating a flow of said sanitizing liquid;
- a plurality of small tubes which depart from a main piping, coming from said tank, and are inserted in each of said nozzles (6).

8. Device (1) for regenerating playing fields made of synthetic grass according to any one of claims 1 to 7, **characterized in that** it comprises a vibrating sieve on which the infill lifted by said rebounding air flow is made fall, said vibrating sieve allowing the infill to fall onto the synthetic grass separating it from everything that has bigger sizes, such as dirt and worn and detached grass filaments.

9. Method for regenerating playing fields made of synthetic grass equipped with an infill and with a ballast substrate made of silica sand, said regeneration being obtained by using a device (1) according to any one of the previous claims, for airing and uncompacting the infill, thereby keeping the filaments of the synthetic grass in a vertical position, wherein the air jet is used for lifting said infill, said air jet being oriented downwards and running over said infill, penetrating through the synthetic grass filaments and creating a bouncing air flow which pushes said infill upwards, lifting it again and uniformly distributing it again with a correct density, said air jet being adjusted depending on the following parameters:
- type and amount of infill, namely natural infill, or synthetic infill;
- typology and height of the synthetic grass filaments;
- humidity and temperature,
said adjustment of said air jet thereby allowing not to affect said ballast substrate.

10. Method for regenerating playing fields made of synthetic grass according to claim 9, **characterized in that** it further provides for vaporizing a sanitizing liquid in the air jet which runs over said infill, penetrating through the filaments of the synthetic grass.

## Patentansprüche

1. Vorrichtung, d. h. Wagen (1), für die Regeneration von Spielfeldern aus synthetischem Gras, die mit einem Belag und einer Unterschicht aus Ballast aus Quarzsand ausgestattet ist, die genannte Regeneration kann durch Belüften und Dekompaktieren des genannten Belages mit Verwendung eines Luftstrahls erhalten werden, der dazu dient, den genannten Belag anzuheben, die **dadurch gekennzeichnet ist, dass** die genannte Vorrichtung (1) einen Zentrifugalventilator (3) in ihrem Inneren enthält, der dazu dient, den genannten Luftstrahl zu erzeugen, er ist durch einen oder mehrere Schläuche (4) mit einem oder mehreren Gebläsekollektoren (5) verbunden, die dazu dienen, Druckluft an mehrere Düsen (6) zu leiten, welche in einem Gehäuse (8) angebracht sind, die genannten Düsen (6) blasen die Luft direkt auf das genannte Spielfeld und heben den Belag durch einen abprallenden Luftstrom an, der genannte Belag wird an das genannte Gehäuse (8) geschleudert und fällt auf den Boden zurück, er wird gleichförmig in den Filamenten des synthetischen Grases verteilt, das genannte Gehäuse (8) besteht vorzugsweise aus Lochblech, der genannte Zentrifugalventilator (3) wird abwechselnd durch die folgenden Mittel angetrieben, die in der Vorrichtung (1) enthalten sind:
- ein Elektromotor (9), der durch einen Stromgenerator (10) und/oder einen Inverter versorgt wird;
- ein auf einer Welle des Ventilators aufgesetzter Verbrennungsmotor oder durch einen Treibriemen;
- die Zapfwelle einer Zugmaschine (2);
- ein Batteriepaket, ein Inverter und ein Elektromotor;
- ein Hydraulikmotor.

2. Vorrichtung (1) für die Regeneration der Spielfelder aus synthetischem Gras gemäß Patentanspruch 1, die **dadurch gekennzeichnet ist, dass** die genannten ein oder mehrere Gebläsekollektoren (5), die dazu dienen, Druckluft an mehrere Düsen (6) zu leiten, unabhängige Ausrichtungen haben.

3. Vorrichtung (1) für die Regeneration der Spielfelder aus synthetischem Gras gemäß Patentanspruch 2, die **dadurch gekennzeichnet ist, dass** die Düsen (6) in einem Abstand von **"d"** vom Boden zwischen 0,2 cm und 25 cm und vorzugsweise in einem Abstand **"d"** vom Boden zwischen 0,5 cm und 8 cm angebracht sind.

4. Vorrichtung (1) für die Regeneration der Spielfelder aus synthetischem Gras gemäß einem beliebigen der Patentansprüche von 1 bis 3, die **dadurch gekennzeichnet ist, dass** die genannten ein oder mehrere Gebläsekollektoren (5) auf höhenverstellbaren Rädern (7) montiert sind, sodass auf diese Weise der genannte Abstand **"d"** der genannten Düsen (6) vom Boden reguliert werden kann, die genannten Räder (7) sind vorzugsweise drehbar.

5. Vorrichtung (1) für die Regeneration der Spielfelder aus synthetischem Gras gemäß Patentanspruch 1, die **dadurch gekennzeichnet ist, dass** sie eine PLC enthält, die dazu dient, automatisch die Drehzahl des genannten Elektromotors (9) zu regeln, der mit einem Druckregler verbunden ist, welcher im genannten einen oder in mehreren Gebläsekollektoren (5) angebracht ist.

6. Vorrichtung (1) für die Regeneration der Spielfelder aus synthetischem Gras gemäß einem beliebigen der Patentansprüche von 1 bis 5, die **dadurch gekennzeichnet ist, dass** die genannte Vorrichtung (1) abwechselnd auf einem Wagen oder einem Fahrzeug mit Eigenantrieb mit Verbrennungsmotor oder einem Elektro- oder Hybridfahrzeug montiert ist.

7. Vorrichtung (1) für die Regeneration der Spielfelder aus synthetischem Gras gemäß einem beliebigen der Patentansprüche von 1 bis 6, die **dadurch gekennzeichnet ist, dass** sie Folgendes enthält:
- einen Tank für die Desinfektionsflüssigkeit;
- einen Hahn für die Durchflussregelung der genannten Desinfektionsflüssigkeit;
- mehrere kleine Schläuche, die von einer Hauptleitung kommen, welche aus dem genannten Tank kommt, die in jede der genannten Düsen (6) eingeführt werden.

8. Vorrichtung (1) für die Regeneration der Spielfelder aus synthetischem Gras gemäß einem beliebigen der Patentansprüche von 1 bis 7, die **dadurch gekennzeichnet ist, dass** sie ein Vibrationssieb enthält, auf das der durch den genannten abprallenden Luftstrom angehobene Belag fällt, das genannte Vibrationssieb ermöglicht es, den Belag auf das synthetische Gras fallen zu lassen und ihn von allem zu trennen, was größer ist, wie Schmutz und verschlissene oder gelöste Grasfilamente.

9. Methode für die Regeneration von Spielfeldern aus synthetischem Gras, die mit einem Belag und einer Unterschicht aus Ballast aus Quarzsand ausgestattet ist, die genannte Regeneration wird durch Verwendung einer Vorrichtung (1) gemäß einem beliebigen der vorhergehenden Patentansprüche erhalten, um den Belag zu belüften und zu dekompaktieren, sodass die Filamente aus synthetischem Gras in vertikaler Position gehalten werden, wobei der Luftstrahl verwendet wird, um den genannten Belag anzuheben, der genannte Luftstrahl ist nach unten gerichtet und trifft auf den genannten Belag, durchdringt die Filamente aus synthetischem Gras und erzeugt einen abprallenden Luftstrom, der den genannten Belag nach oben schiebt und ihn wieder anhebt und wieder mit korrekter Dichte gleichförmig verteilt, der genannte Luftstrahl wird aufgrund der folgenden Parameter reguliert:
- Typ und Menge des Belages, d. h. natürlicher oder synthetischer Belag;
- Typologie und Höhe der Filamente aus synthetischem Gras;
- Feuchtigkeit und Temperatur,
die genannte Regulierung des genannten Luftstrahls ermöglicht es auf diese Weise, nicht die genannte Unterschicht aus Ballast zu beeinflussen.

10. Methode für die Regeneration von Spielfeldern aus synthetischem Gras gemäß Patentanspruch 9, die **dadurch gekennzeichnet ist, dass** sie außerdem die Verdampfung einer Desinfektionsflüssigkeit im Luftstrahl vorsieht, der auf den genannten Belag trifft und die Filamente des synthetischen Grases durchdringt.

## Revendications

1. Dispositif, à savoir un chariot, (1) pour la régénération de terrains de sport en gazon synthétique, avec lestage et ballast en sable de silice ; la régénération est obtenue en aérant et en décompactant le lestage à l'aide d'un jet d'air apte à soulever le lestage, **caractérisé en ce que** le dispositif (1) contient un ventilateur centrifuge (3) apte à générer le jet d'air, relié à travers un ou plusieurs tubes flexibles (4) à un ou plusieurs collecteurs de soufflage (5), aptes à envoyer l'air sous pression à une pluralité de buses (6) situées à l'intérieur d'un protecteur (8) ; les buses (6) soufflent directement sur le terrain et le rebondissement du flux d'air soulève le lestage ; le lestage est propulsé contre le protecteur (8) puis il retombe sur le terrain où il est distribué uniformément entre les brins de gazon synthétique ; le protecteur (8) est de préférence en tôle perforée ; le ventilateur centrifuge (3) est actionné par l'un des moyens suivants contenus dans le dispositif (1) :
- un moteur électrique (9) alimenté par un générateur de courant (10) et/ou un inverseur ;
- un moteur à combustion assemblé sur l'arbre du ventilateur ou au moyen d'une courroie de transmission ;
- la prise de force d'un tracteur de remorquage (2) ;
- un groupe de batteries, un inverseur et un moteur électrique ;
- un moteur hydraulique.

2. Dispositif (1) pour la régénération de terrains de sport en gazon synthétique, selon la revendication 1, **caractérisé en ce qu'**un ou plusieurs collecteurs de soufflage (5), aptes à envoyer l'air sous pression à une pluralité de buses (6), ont des orientations indépendantes.

3. Dispositif (1) pour la régénération de terrains de sport en gazon synthétique, selon la revendication 2, **caractérisé en ce que** les buses (6) se trouvent à une distance « **d** » du terrain comprise entre 0,2 cm et 25 cm, et de préférence à une distance « **d** » du terrain comprise entre 0,5 cm et 8 cm.

4. Dispositif (1) pour la régénération de terrains de sport en gazon synthétique, selon l'une des revendications de 1 à 3, **caractérisé en ce qu'**un ou plusieurs collecteurs de soufflage (5) sont montés sur des roues (7) réglables en hauteur, ce qui permet de régler la distance « **d** » entre les buses (6) et le terrain ; les roues (7) sont de préférence pivotantes.

5. Dispositif (1) pour la régénération de terrains de sport en gazon synthétique, selon la revendication 1, **caractérisé en ce qu'**il comprend un Automate apte à régler automatiquement le régime de rotation du moteur électrique (9), relié à un pressostat situé sur un ou plusieurs collecteurs de soufflage (5).

6. Dispositif (1) pour la régénération de terrains de sport en gazon synthétique, selon l'une des revendications de 1 à 5, **caractérisé en ce que** le dispositif (1) est monté soit sur un chariot, soit sur un véhicule automoteur avec moteur à combustion ou un véhicule électrique ou hybride.

7. Dispositif (1) pour la régénération de terrains de sport en gazon synthétique, selon l'une des revendications de 1 à 6, **caractérisé en ce qu'**il comprend :
- un réservoir contenant un liquide désinfectant ;
- un robinet pour régler le flux du liquide désinfectant ;
- une pluralité de petits tubes qui partent d'une tuyauterie principale, venant du réservoir, et entrent dans chaque buse (6).

8. Dispositif (1) pour la régénération de terrains de sport en gazon synthétique, selon l'une des revendications de 1 à 7, **caractérisé en ce qu'**il comprend un tamis vibreur sur lequel tombe le lestage qui est soulevé par le rebondissement du flux d'air ; le tamis vibreur fait retomber le délestage sur le gazon synthétique et le sépare de tout élément ayant des dimensions supérieures, tels que la saleté et les brins de gazon qui se sont détachés.

9. Méthode pour la régénération de terrains de sport en gazon synthétique avec lestage et ballast en sable de silice ; la régénération est obtenue en utilisant un dispositif (1) selon l'une des revendications précédentes, pour aérer et décompacter le lestage, en maintenant ainsi les brins de gazon synthétique en position verticale, où le jet d'air est utilisé pour soulever le lestage ; le jet d'air est orienté vers le bas, il percute le lestage en pénétrant à travers les brins de gazon synthétique et crée un flux d'air dont le rebondissement pousse le lestage vers le haut, ce dernier est donc soulevé puis redistribué de manière uniforme avec une densité correcte ; le jet d'air est réglé en fonction des paramètres suivants :
- type et quantité de lestage, à savoir lestage naturel ou synthétique ;
- type et hauteur des brins de gazon synthétique ;
- humidité et température,
le réglage du jet d'air permet de ne pas influencer le ballast.

10. Méthode pour la régénération de terrains de sport en gazon synthétique selon la revendication 9, **caractérisée en ce qu'**elle prévoit aussi la vaporisation d'un liquide désinfectant dans le jet d'air qui percute le lestage quand il pénètre à travers les brins de gazon synthétique.
